# EUROPEAN PATENT APPLICATION

(11) **EP 0 968 660 A1**
(43) Date of publication of application: **05.01.2000**
(21) Application number: 99305158.0
(22) Date of filing: 30.06.1999
(51) Int. Cl.: A23L 1/325, A22C 25/20

(54) **Fish processing**

(30) Priority: 30.06.1998 GB 9813996
(71) Applicant: Wilson, Neil, Peterhead, Aberdeenshire AB42 3AP (GB)
(72) Inventor: Wilson, Neil, Peterhead, Aberdeenshire AB42 3AP (GB)
(74) Representative: Kennedy, David Anthony

(57) **Abstract**

A method for processing fish comprises feeding laminated fish into a mincing machine, collecting and processing the minced fish into an edible product and using fat derived from the fat seam of the fish as a substitute for the use of saturated fats.

## Description

This invention relates to fish processing and especially but not exclusively to a method of preparing Mackerel food products.

The main perceived problem of fish products is the presence of bones that have not been removed during processing. Indeed, the processing of fish is mainly directed at deboning using dedicated machinery. This is relatively straightforward for white fish, for example Haddock, Cod, Whitting, Blue Whitting, Cat Fish, Dog Fish, Sole and Plaice. Their flesh can then be frozen and stored until required. Frozen fish are known as having been laminated.

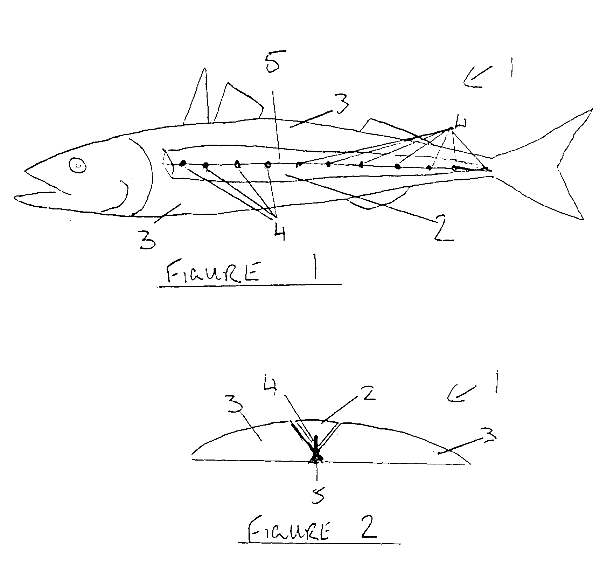

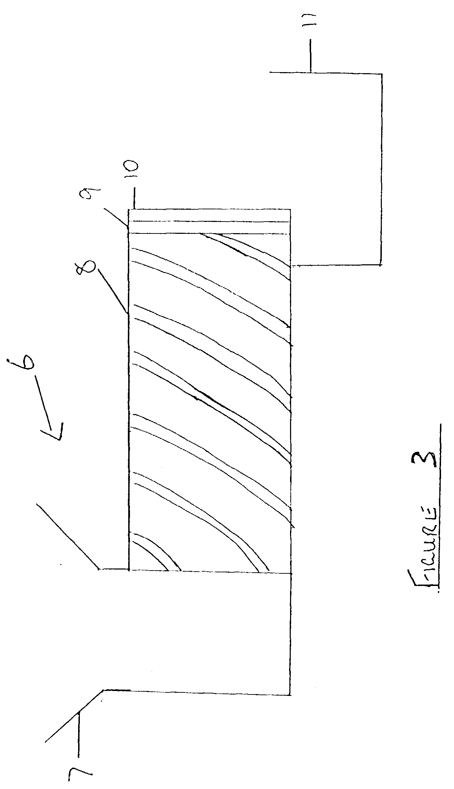

However, the process of deboning pelagic fish is much more difficult due to their bone structure, which has a number of bones protruding at right angles from the spine, see Figures 1 and 2. These bones are known as pin bones. Types of pelagic fish include Mackerel, Horse Mackerel, Salmon, Herring, Sprats and Anchovies.

Many manufacturers currently debone pelagic fish using machinery that requires the fish to be either thawed or fresh. The commonly used Badder 699 (Trade Mark) is an example of this type of machinery. In certain species, such as Salmon, deboning is carried out manually.

However, due to fact that Mackerel is a seasonal fish and would therefore need to be processed from frozen the use of a machine such as the Badder 699 (Trade Mark) for its deboning is virtually impossible.

Processed fish are mainly used in the manufacture of products such as burgers or fish fingers. However, to be able to supply an edible product manufacturers are required to process fish in a similar manner to that of red meat, for example by the addition of further ingredients including rusks, water and saturated fats. A lack of these ingredients results in a dry product with a substandard consistency and a reduced shelf life. The use of saturated fat in food products is known to have associated health risks.

It would therefore be desirable to be able to use a healthier alternative to the saturated fat, for example polyunsaturated fat.

Omega 3 Fatty Acid, a polyunsaturated fat has been recognised by many leading Scientists, Nutritionists, Dieticians and Doctors as having a number of health benefits including prevention of circulatory problems, reduction of the risk of diabetes and thrombosis, relief for arthritis sufferers, inhibition of tumour development and acceleration of improvements in psoriasis.

Mackerel and Herring are particularly rich in Omega 3 Fatty Acid. Mackerel is also known to provide essential oils for embryo and brain development.

In Mackerel Omega 3 is found in a fat seam which runs length wise along its body, see Figure 1. This fat seam is regarded by food manufacturers as being problematic and undesirable.

On cooking, Mackerel acquires a taste that is similar to that of ordinary burgers and sausages. As a result of this similarity in taste, the development of Mackerel burgers would provide a healthy alternative to the types of burgers and sausages currently consumed.

There are a number of further health benefits associated with the use of Mackerel. The products contain no harmful additives being comprised solely of the Mackerel, polyunsaturates, antioxidants and seasoning.

Mackerel has also not had any of the health warnings associated with beef.

Thus the use of processed Mackerel in food products, such as burgers, would provide a healthy alternative to the burgers that are currently on the market. The current production of burgers and sausages is over 250,000 tonnes per year in Britain. When it is remembered that these products contain 40-70% saturated fat, a known cause of serious health problems, the need for a healthy alternative is highly desirable. In addition, the market for healthy option and vegetarian products is continually growing.

It would therefore be desirable to have a method and apparatus for processing Mackerel into a form suitable for making food products whilst it is still frozen.

It is an object of the present invention to provide apparatus and method for processing Mackerel such that it may be used in a number of different types of food.

According to a first aspect of the present invention there is provided a method for processing fish comprising the feeding of laminated fish into a mincing machine, collecting and processing the minced fish into an edible product and using fat derived from the fat seam of the Mackerel as a substitute for the use of saturated fats.

Preferably the fat seam is further used as a substitute for either rusks or water.

Preferably the fish can be directly processed into a food product. Typically the fish can be processed into sausages or burgers.

Preferably the type of fish that can be processed is either Mackerel or Herring.

According to a second aspect of the present invention there is provided apparatus for processing Mackerel comprising a mincing machine having a funnel, a slicing mechanism and a collection drum.

Preferably the funnel is attached to a worm. The worm can be used to begin the mincing process.

Preferably the mincing machine is fitted with a slicing mechanism.

More preferably the slicing mechanism comprises either a single blade or a plurality of blades.

Preferably the slicing mechanism is tight to the circular plate.

In order to provide a better understanding of the invention, an example of the invention will now be described with reference to the accompanying Figures, in which
Figure 1 illustrates a side view of the position of the fat seam of a Mackerel;
Figure 2 illustrates a cross-sectional view of the position of the fat seam of a Mackerel; and
Figure 3 illustrates a Mackerel processor according to the present invention.

Referring firstly to Figures 1 and 2 a Mackerel is generally depicted at 1. A fat seam 2 is situated between two bodies of Mackerel flesh 3. A series of pin bones 4 extends from a backbone 5.

Referring to Figure 3 a Mackerel processor is generally depicted at 6 comprising a funnel 7, a worm 8, a series of blades 9 and a circular plate 10 and a collection box 11. The circular plate 10 contains a plurality of openings (not shown).

The Mackerel, having been filleted and frozen or laminated at point of catch, may be processed in the following way. The Mackerel is fed into the worm 8 via the funnel 7. The Mackerel passes through the worm 8 and is shredded by the blades 9. The shredded Mackerel now passes through the apertures in the circular plate 10 and is collected in the collecting box 11. The Mackerel can then be processed into an edible product, for example the Mackerel can be processed into either sausages or burgers.

The Mackerel can be coated prior to cooking, for example it may be battered and crumbed. This has the advantage of protecting the fats and anti-oxidants thus extending the shelf life of the product.

The main advantages of the present invention are that Mackerel would be processed into a form that could readily be incorporated into sausages and burgers. The processing and product manufacture could be done using current technology and therefore neither expensive retraining or machinery would be required.

A further advantage of the present invention is that it provides a method for the use of Omega 3, previously considered to be problematic and undesirable in terms of food production. These so-called 'oily fish' are virtually the only source of this beneficial fat.

Mackerel is also a considerably cheaper raw material than those currently used, particularly beef.

Current technology for the production of burgers and sausages requires the presence of a high fat content to produce an edible product. However, if white fish based products are made, their low fat level requires the addition of animal fat to the ingredients making them unsuitable for vegetarians and reducing their health value.

Thus the manufacture of Mackerel products would have a number of benefits in terms of health and a wider potential market.

An alternative embodiment provides for the extraction and use of the fat seam of the Mackerel, in other food products, as a replacement for saturated fat.

Further modifications and improvements may be made without departing from the scope of the invention herein intended.

## Claims

1. A method for processing fish comprising the feeding of laminated fish into a mincing machine, collecting and processing the minced fish into an edible product and using fat derived from the fat seam of the Mackerel as a substitute for the use of saturated fats.

2. A method as claimed in Claim 1 wherein the fat seam is further used as a substitute for either rusks or water.

3. A method as claimed in Claims 1 or 2 wherein the fish can be directly processed into a food product.

4. A method as claimed in any of the preceding Claims wherein the fish can be processed into sausages or burgers.

5. A method as claimed in any of the preceding Claims wherein the type of fish that can be processed is either Mackerel or Herring.

6. Apparatus for processing Mackerel comprising a mincing machine having a funnel, a slicing mechanism and a collection drum.

7. Apparatus as claimed in Claim 6 wherein the funnel is attached to a worm which is used to begin the mincing process.

8. Apparatus as claimed in Claims 6 or 7 wherein the mincing machine is fitted with a slicing mechanism.

9. Apparatus as claimed in Claims 6-8 wherein the slicing mechanism comprises either a single blade or a plurality of blades.

10. Apparatus as claimed in Claims 6-9 wherein the slicing mechanism is tight to the circular plate.
